# EUROPEAN PATENT APPLICATION

(11) **EP 2 763 489 A1**
(43) Date of publication of application: **06.08.2014**
(21) Application number: 12835257.2
(22) Date of filing: 13.09.2012
(51) Int. Cl.: H04W 74/08, H04J 11/00, H04W 16/28

(54) **WIRELESS COMMUNICATION SYSTEM, MOBILE STATION APPARATUS, BASE STATION APPARATUS, WIRELESS COMMUNICATION METHOD, AND INTEGRATED CIRCUIT**

(30) Priority: 28.09.2011 JP 2011211772
(71) Applicant: Sharp Kabushiki Kaisha, Osaka-shi, Osaka 545-8522 (JP)
(72) Inventor: KATO, Yasuyuki, Osaka 545-8522 (JP); UEMURA, Katsunari, Osaka 545-8522 (JP); IMAMURA, Kimihiko, Osaka 545-8522 (JP)
(74) Representative: Müller-Boré & Partner Patentanwälte PartG mbB
(86) International application number: PCT/JP2012/073448
(87) International publication number: WO 2013/047219

(57) **Abstract**

Efficient transmission and reception of a random access response message is performed between a base station device and a mobile station device. When a random access preamble is transmitted from a primary cell, the mobile station device monitors a first control channel of the primary cell. When the random access preamble is transmitted from a secondary cell, the mobile station device monitors a second control channel of the secondary cell. When a random access response identifier is detected, the mobile station device receives a random access response message that is allocated to a data channel. When the random access preamble is received, the base station device transmits the random access response identifier on the first control channel and the second control channel of a downlink corresponding to an uplink on which the random access preamble is received, and transmits the random access response message on the data channel.

## Description

### Technical Field

The present invention relates to a base station device, a mobile station device, and a wireless communication system. More specifically, the present invention relates to a wireless communication system, a base station device, a mobile station device, a wireless communication method, and an integrated circuit during operation in an instance in which a random access procedure is performed.

### Background Art

In the 3rd generation partnership project (3GPP), a W-CDMA system has been standardized as a third-generation cellular mobile communication system, and services based on the W-CDMA system are being started in succession. In addition, HSDPA which has an even higher communication speed has also been standardized, and HSDPA-based services are being performed.

Meanwhile, in the 3GPP, standardization of advancement in third-generation wireless access (evolved universal terrestrial radio access; hereinafter referred to as "EUTRA") is being conducted. As a communication scheme for downlink in EUTRA, an orthogonal frequency division multiplexing (OFDM) scheme that is resistant to multi-path interference and suitable for high-speed transmission is used. In addition, as a communication scheme for uplink, taking into consideration cost and power consumption of mobile station devices, a discrete Fourier transform (DFT)-spread OFDM scheme in a single-carrier frequency-division multiplexing method (single carrier-frequency division multiple access (SC-FDMA)) that is capable of reducing the peak-to-average power ratio (PAPR) of transmitted signals is used.

In addition, in the 3GPP, standardization of Advanced-EUTRA, which is a further evolution of EUTRA, is also being conducted. In Advanced-EUTRA, a frequency band of up to a maximum 100 MHz bandwidth is used for uplink and for downlink, and communication at a maximum transmission rate of 1 Gbps or higher for downlink and 500 Mbps or higher for uplink is presumed.

In Advanced-EUTRA, it is considered that the maximum 100 MHz frequency band can be actualized by bundling a plurality of frequency bands of 20 MHz or lower in EUTRA, to allow even mobile station devices in EUTRA to be accommodated. In Advanced-EUTRA, a single frequency band of 20 MHz or lower in EUTRA is referred to as a component carrier (CC) (NPL 2, described below). In addition, a single downlink component carrier and a single uplink component carrier are combined to configure a single cell. A single cell may also be configured by only a single downlink component carrier. A base station device allocates a plurality of cells to a mobile station device and communicates with the mobile station device via the allocated cells.

The base station device allocates one or more cells having differing frequencies that match the communication capabilities and communication conditions of the mobile station device, and communicates with the mobile station device via the plurality of allocated cells. Among the plurality of cells allocated to the mobile station device, one cell is a primary cell, and the other cells are secondary cells. The primary cell is configured for special functions, such as an uplink control channel PUCCH allocation function and a security function.

In addition, it is also considered that the base station device communicates with the mobile station device via a medium, such as a repeater or a remote radio head (RRH).

### Citation List

### Non Patent Literature

NPL 1: 3GPP Technical Specification (TS) 36.300, V9.4.0 (2010-06), Evolved Universal Terrestrial Radio Access (E-UTRA) and Evolved Universal Terrestrial Radio Access Network (E-UTRAN), Overall description Stage 2
NPL 2: 3GPP Technical Report (TR) 36.814, V9.0.0 (2010-03), Evolved Universal Terrestrial Radio Access (E-UTRA) Further advancements for E-UTRA physical layer aspects
NPL 3: R1-111636 "DL Control Channel Enhancement for DL MIMO in Rel-11", NTT DOCOMO, 3GPP TSG RAN WG1 Meeting #65, Barcelona, Spain, May, 9-13, 2011

### Summary of Invention

### Technical Problem

When the mobile station device communicates with the base station device using the plurality of cells, the mobile station device may connect to the base station device via a repeater, a remote radio head (RRH), or the like. In such instances, reception timing at the mobile station device for data from a downlink component carrier differs with each cell. Furthermore, transmission timing to the base station device differs with the uplink component carrier of each cell. Therefore, the mobile station device is required to (i) perform a random access procedure from a secondary cell, (ii) acquire transmission timing from the base station device, (iii) perform transmission timing adjustment, and (iv) perform data transmission to the base station device.

In addition, in Advanced-EUTRA, the mobile station device receives data from the base station device via the plurality of cells. Therefore, to reduce load placed on the mobile station device during reception, a common search space in the search spaces of the secondary cells is not monitored.

However, a random access response identifier RA-RNTI that indicates a response to a random access preamble transmission is allocated to the common search space and transmitted. Therefore, even when the mobile station device performs the random access procedure from a secondary cell and performs the random access preamble transmission, the mobile station device cannot receive a random access response that is a response to the random access preamble transmission. In addition, in Advanced-EUTRA, when the mobile base station connects to the base station device via the RRH, an instance in which the mobile station device cannot receive a downlink control channel PDCCH transmitted from the RRH due to interference is also a subject of discussion.

The present invention has been achieved in light of circumstances such as those described above. An object of the present invention is to provide a wireless communication system, a mobile station device, a base station device, a wireless communication method, and an integrated circuit that are used to detect a random access response identifier RA-RNTI by a secondary cell and receive a random access response message, in an instance in which a random access procedure is performed by a secondary cell.

### Solution to Problem

(1) To achieve the above-described object, the present invention implements means such as the following. In other words, a wireless communication system of the present invention is a wireless communication system in which a base station device and a mobile station device communicate using a plurality of cells of which downlink is composed of at least a first control channel, a second control channel, and a data channel. The plurality of cells are composed of a single primary cell and one or more secondary cells. The mobile station device monitors the first control channel of the primary cell, in an instance in which a random access preamble is transmitted from the primary cell to the base station device. The mobile station device monitors the second control channel of the secondary cell, in an instance in which the random access preamble is transmitted from the secondary cell to the base station device. The mobile station device receives a random access response message that is allocated on the data channel from the base station device, in an instance in which a random access response identifier that indicates a response to the random access preamble transmission is detected on the control channel that is being monitored. The base station device transmits, to the mobile station device, the random access response identifier on at least either of the first control channel and the second control channel of a downlink corresponding to an uplink on which the random access preamble is received, and transmits the random access response message on the data channel, in an instance in which the random access preamble is received from the mobile station device.
(2) In addition, it is preferable that the mobile station device monitors a common search space on the second control channel of the secondary cell, in an instance in which the random access preamble is transmitted from the secondary cell.
(3) In addition, it is preferable that the base station device transmits the random access response identifier from the common search space on the first control channel of the primary cell, in an instance in which the random access preamble is received from the primary cell, and transmits the random access response identifier from the common search space on the second control channel of the secondary cell, in an instance in which the random access preamble is received from the secondary cell.
(4) In addition, a mobile station device of the present invention communicates with a base station device using a plurality of cells of which downlink is composed of at least a first control channel, a second control channel, and a data channel. The plurality of cells are composed of a single primary cell and one or more secondary cells. The mobile station device monitors the first control channel of the primary cell, in an instance in which a random access preamble is transmitted from the primary cell to the base station device. The mobile station device monitors the second control channel of the secondary cell, in an instance in which the random access preamble is transmitted from the secondary cell to the base station device. The mobile station device receives a random access response message that is allocated on the data channel from the base station device, in an instance in which a random access response identifier that indicates a response to the random access preamble transmission is detected.
(5) In addition, a base station device of the present invention communicates with a mobile station device using a plurality of cells of which downlink is composed of at least a first control channel, a second control channel, and a data channel. The plurality of cells are composed of a single primary cell and one or more secondary cells. The base station device transmits a random access response identifier that indicates a response to a received random access preamble on at least either of the first control channel and the second control channel of a downlink corresponding to an uplink on which the random access preamble is received, and transmits a random access response message on the data channel, in an instance in which the random access preamble is received from the mobile station device.
(6) In addition, a wireless communication method of the present invention is applied to a wireless communication system in which a base station device and a mobile station device communicate using a plurality of cells of which downlink is composed of at least a first control channel, a second control channel, and a data channel. The plurality of cells are composed of a single primary cell and one or more secondary cells. The wireless communication method includes at least: a step of monitoring, by the mobile station device, the first control channel of the primary cell, in an instance in which the mobile station device transmits a random access preamble from the primary cell to the base station device; a step of monitoring, by the mobile station device, the second control channel of the secondary cell, in an instance in which the mobile station device transmits the random access preamble from the secondary cell to the base station device; a step of receiving, by the mobile station device, a random access response message that is allocated on the data channel from the base station device, in an instance in which the mobile station device detects a random access response identifier that indicates a response to the random access preamble transmission on the control channel; and a step of transmitting, by the base station device to the mobile station device, the random access response identifier on at least either of the first control channel and the second control channel of a downlink corresponding to an uplink on which the random access preamble is received, and transmitting the random access response message on the data channel, in an instance in which the base station device receives the random access preamble.
(7) In addition, an integrated circuit of the present invention is applied to a mobile station device that communicates with a base station device using a plurality of cells of which downlink is composed of at least a first control channel, a second control channel, and a data channel. The plurality of cells are composed of a single primary cell and one or more secondary cells. The integrated circuit includes: a means for monitoring the first control channel of the primary cell, in an instance in which a random access preamble is transmitted from the primary cell to the base station device; a means for monitoring the second control channel of the secondary cell, in an instance in which the random access preamble is transmitted from the secondary cell to the base station device; and a means for receiving a random access response message that is allocated on the data channel from the base station device, in an instance in which a random access response identifier that indicates a response to the random access preamble transmission is detected.
(8) In addition, an integrated circuit of the present invention is applied to a base station device that communicates with a mobile station device using a plurality of cells of which downlink is composed of at least a first control channel, a second control channel, and a data channel. The plurality of cells are composed of a single primary cell and one or more secondary cells. The integrated circuit includes: a means for transmitting a random access response identifier that indicates a response to a received random access preamble on at least either of the first control channel and the second control channel of a downlink corresponding to an uplink by which the random access preamble is received, in an instance in which the random access preamble is received from the mobile station device; and a means for transmitting a random access response message on the data channel, in an instance in which the random access preamble is received from the mobile station device.

### Advantageous Effects of Invention

According to the present invention, a mobile station device can receive allocation information of a random access response and receive a random access response message even when the mobile station device cannot read a downlink control channel PDCCH of a secondary cell, merely by a base station device allocating an enhanced downlink control channel E-PDCCH to the mobile station device, adding the allocation information of the random access response message to the enhanced downlink control channel E-PDCCH, and transmitting the allocation information of the random access response message.

### Brief Description of Drawings

[Fig. 1] Fig. 1 is a diagram of a configuration of a mobile station device according to an embodiment of the present invention.
[Fig. 2] Fig. 2 is a diagram of a configuration of a base station device according to the embodiment of the present invention.
[Fig. 3] Fig. 3 is a diagram of a configuration example of cells according to the embodiment of the present invention.
[Fig. 4] Fig. 4 is a flowchart of an operation example of a random access response message reception process by the mobile station device according to the embodiment of the present invention.
[Fig. 5] Fig. 5 is a diagram of a channel configuration in EUTRA.
[FIG. 6] Fig. 6 is a diagram of a configuration of uplink in EUTRA.
[Fig. 7] Fig. 7 is a diagram of a configuration of downlink in EUTRA.
[Fig. 8] Fig. 8 is a diagram of a procedure for contention-based random access.
[Fig. 9] Fig. 9 is a diagram of a procedure for non-contention-based random access.
[Fig. 10] Fig. 10 is an explanatory diagram of a downlink component carrier in Advanced-EUTRA.
[Fig. 11] Fig. 11 is an explanatory diagram of an uplink component carrier in Advanced-EUTRA.
[Fig. 12] Fig. 12 is a diagram of an example in which the base station device and the mobile station device communicate via a repeater.

### Description of Embodiments

Downlink in EUTRA is composed of a downlink reference signal, a downlink synchronization channel (DSCH), a downlink shared channel (physical downlink shared channel (PDSCH)), a downlink control channel (physical downlink control channel (PDCCH)), a broadcast channel (physical broadcast channel (PBCH)), and the like.

Uplink in EUTRA is composed of an uplink reference signal, a random access channel (RACH), an uplink shared channel (physical uplink shared channel (PUSCH)), an uplink control channel (physical uplink control channel (PUCCH)), and the like. In addition, the uplink reference signal is composed of two types of signals, a demodulation reference signal and a sounding reference signal.

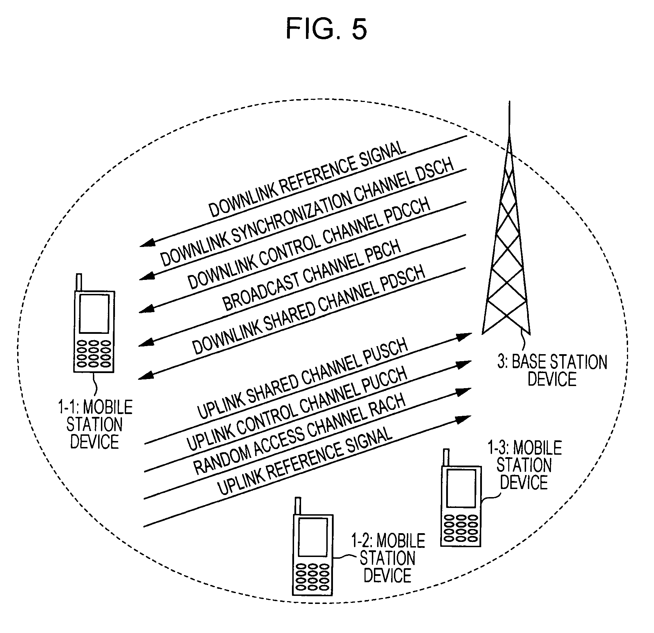

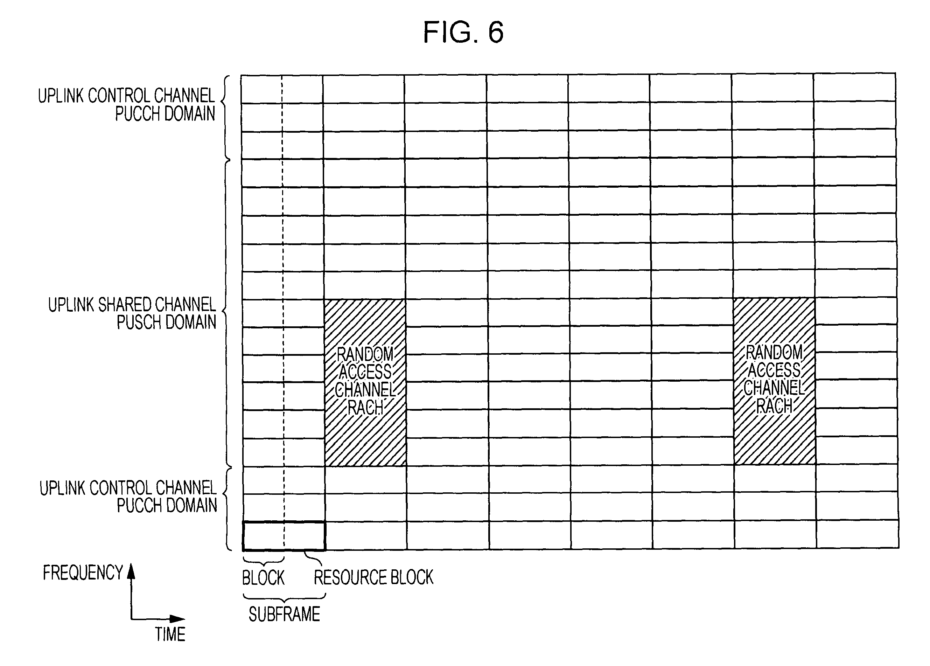

Fig. 5 is a diagram of a channel configuration in EUTRA. Fig. 6 is a diagram of a configuration of uplink in EUTRA. A single block is composed of 12 subcarriers, and six or seven OFDM symbols. A single resource block (RB) is configured using two blocks. The uplink shared channel PUSCH and the uplink control channel PUCCH are used in single resource block units. The random access channel RACH is configured using what amounts to six resource blocks.

The uplink reference signal is allocated to a certain OFDM symbol within a resource block. The channels for uplink are divided into an uplink shared channel PUSCH domain, an uplink control channel PUCCH domain, and the random access channel RACH, as shown in Fig. 6. A base station device gives notification of information related to the respective domains of the uplink shared channel PUSCH and the uplink control channel PUCCH. In addition, the base station device individually allocates to mobile station devices, wireless resources of the uplink shared channel PUSCH and the uplink control channel PUCCH from the domains. The random access channel RACH is allocated at a fixed interval.

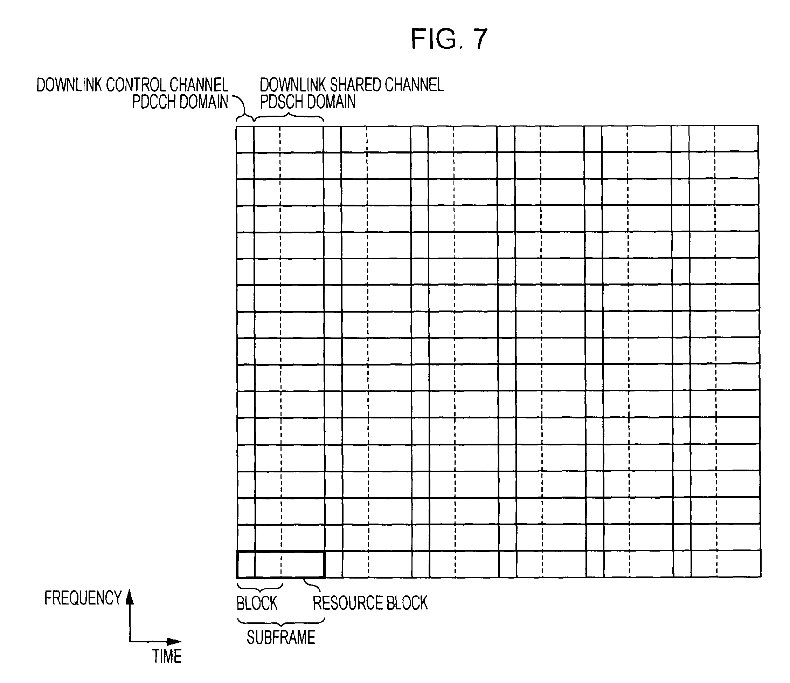

Fig. 7 is a diagram of a configuration of downlink in EUTRA. In a manner similar to uplink, a single block is composed of 12 subcarriers, and six or seven OFDM symbols. A single resource block (RB) is configured using two blocks. The downlink control channel PDCCH is allocated to a downlink control channel PDCCH domain (control channel domain) of the beginning first to forth OFDM symbols of each resource block. The downlink shared channel (data channel) PDSCH is allocated to a downlink shared channel PDSCH domain (data channel domain) that is the remaining OFDM symbols of the resource block.

The downlink shared channel PDSCH is a channel used for transmission of user data and control data from the base station device to a mobile station device. The downlink control channel PDCCH is a channel used for transmission of control information, such as allocation information regarding wireless resources of the downlink shared channel PDSCH or the uplink shared channel PUSCH, from the base station device to the mobile station device. The downlink reference signal is used for demodulation of the downlink shared channel PDSCH and the downlink control channel PDCCH. The downlink synchronization channel DSCH is used for downlink synchronization by the mobile station device. The broadcast channel PBCH is used for notification of information related to system information of a cell of the base station device.

The downlink control channel PDCCH has a common search space and individual search spaces (UE-specific search spaces). Identifiers for all mobile station devices or a plurality of mobile station devices within a cell are allocated to the common search space. Identification information individually assigned to each mobile station device is allocated to the individual search space, together with allocation information. For example, allocation information of the broadcast channel, allocation information of a random access response message, and control information for a certain mobile station device are allocated to the common search space.

In addition, allocation information of individual mobile station devices is allocated to the individual search space. The allocation information transmitted on the downlink control channel PDCCH is composed of identification information and allocation information. The identification information is a mobile station device identifier (cell-radio network temporary identity (C-RNTI)), a random access response identifier (random access-radio network temporary identity (RA-RNTI)), and the like.

The uplink shared channel PUSCH is used for transmission of user data and control data from the mobile station device to the base station device. A hybrid automatic repeat request (HARQ) process is performed on data transmitted and received on the uplink shared channel PUSCH and the downlink shared channel PDSCH. By a combining process being performed on initially transmitted data and retransmit data during retransmission, the capability of correcting errors in data during retransmission is improved. The uplink control channel PUCCH is used for notification of a response (acknowledge (ACK)/negative acknowledge (NACK)) to downlink data and control information, such as downlink wireless channel quality information, from the base station device.

The random access channel RACH is mainly used for random access preamble transmission for acquiring transmission timing information, from the mobile station device to the base station device. The random access preamble transmission is performed during a random access procedure. The demodulation reference signal of the uplink reference signal is used for demodulation of the uplink shared channel PUSCH by the base station device. The demodulation reference signal of the uplink reference signal is inserted in a fourth symbol position and an eleventh symbol position on the uplink shared channel PUSCH. The sounding reference signal of the uplink reference signal is used for determination of the uplink wireless channel quality by the base station device. The sounding reference signal of the uplink reference signal is inserted in the fourteenth symbol position on the uplink shared channel PUSCH. Wireless resources for transmitting the sounding reference signal are allocated to individual mobile station devices from the base station device.

The random access procedure involves two types of access procedures, a contention-based random access and a non-contention-based random access (NPL 1).

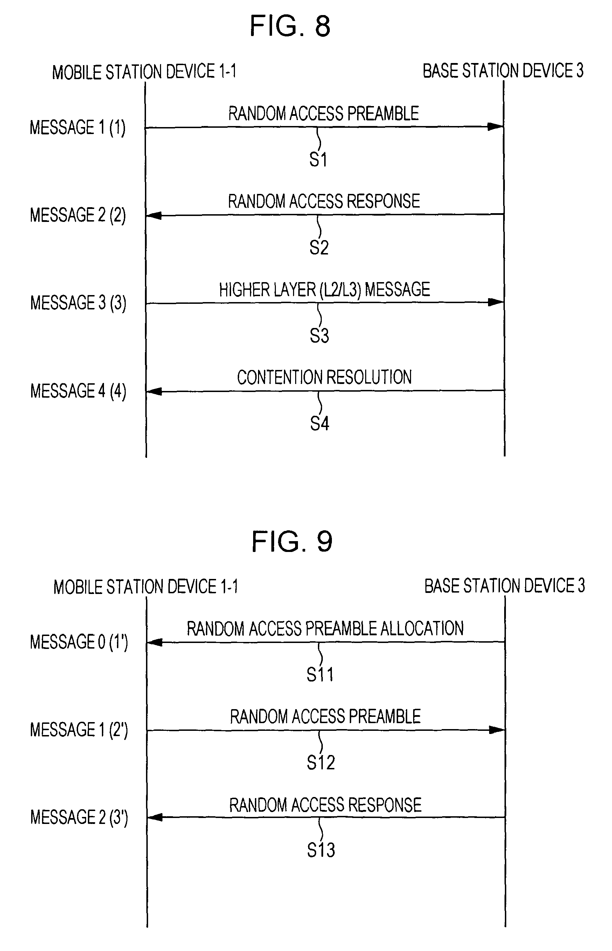

Fig. 8 is a diagram of a procedure for contention-based random access. The contention-based random access is a random access procedure in which collision may occur between mobile station devices. The contention-based random access is performed for scheduling requests and the like, for initial access from a state in which the mobile station device is not connected to (communicating with) the base station device, or in instances in which an uplink data transmission is generated in the mobile station device in a state in which, although the mobile station device is connected to the base station device, uplink synchronization is off.

Fig. 9 is a diagram of a procedure for non-contention-based random access. The non-contention-based random access is a random access procedure in which collision between mobile station devices does not occur. In the non-contention-based random access, the mobile station device starts the random access procedure under instruction from the base station device in special instances, such as when a handover is performed to quickly synchronize uplink between the mobile station device and the base station device when, although the base station device and the mobile station device are connected, the uplink synchronization is off, and when the transmission timing of the mobile station device is not valid (NPL 1). Instruction for non-contention-based random access is given by a radio resource control (RRC: Layer 3) layer message and control data of the downlink control channel PDCCH.

The contention-based random access procedure will be briefly described with reference to Fig. 8. First, a mobile station device 1-1 transmits a random access preamble to a base station device 3 (message 1: (1), Step S1). Then, the base station device 3 that has received the random access preamble transmits, to the mobile station device 1-1, a response to the random access preamble (random access response) (message 2: (2), Step S2). The mobile station device 1-1 transmits a higher layer (Layer 2/Layer 3) message based on scheduling information included in the random access response (message 3: (3), Step S3). The base station device 3 that received the higher layer message at (3) transmits, to the mobile station device 1-1, a collision confirmation message (message 4: (4), Step S4). The contention-based random access is also referred to as a "random preamble transmission".

The non-contention-based random access procedure will be briefly described with reference to Fig. 9. First, the base station device 3 notifies the mobile station device 1-1 of a preamble number (or a sequence number) and a random access channel number to be used (message 0: (1)', Step S11). The mobile station device 1-1 transmits a random access preamble of the designated preamble number to the designated random access channel RACH (message 1: (2)', Step S12). Then, the base station device 3 that has received the random access preamble transmits, to the mobile station device 1-1, a response to the random access preamble (random access response) (message 2: (3)', Step S13). However, when the value of the notified preamble number is zero, the mobile station device 1-1 performs the contention-based random access. The non-contention-based random access is also referred to as a "dedicated preamble transmission".

A procedure by which the mobile station device 1-1 connects to the base station device 3 will be described with reference to Fig. 8. First, the mobile station device 1-1 acquires system information of the base station device 3 from the broadcast channel PBCH or the like. The mobile station device 1-1 performs the random access procedure based on random access-related information included in the system information and connects to the base station device 3. The mobile station device 1-1 generates the random access preamble from the random access-related information and the like in the system information. Then, the mobile station device 1-1 transmits the random access preamble on the random access channel RACH (message 1: (1)).

When the base station device 3 detects the random access preamble from the mobile station device 1-1, the base station device 3 calculates an amount of deviation in transmission timing between the mobile station device 1-1 and the base station device 3 from the random access preamble. The base station device 3 then performs scheduling (designates an uplink wireless resource location (location of the uplink shared channel PUSCH), a transmission format (message size), and the like) for transmission of the Layer 2 (L2)/Layer 3 (L3) message.

The base station device 3 then assigns a temporary cell-radio network temporary identity (C-RNTI: mobile station device identifier) to the mobile station device 1-1. The base station device 3 allocates a random access-radio network temporary identity (RA-RNTI: random access response identifier) to the downlink control channel PDCCH, in the common search space of the downlink control channel PDCCH. The RA-RNTI indicates a response (random access response) addressed to the mobile station device 1-1 that has transmitted the random access preamble on the random access channel RACH. The base station device 3 allocates a random access response message including transmission timing information, scheduling information, the temporary C-RNTI, and information on the received random access preamble to the downlink shared channel PDSCH and transmits the random access response message (message 2: (2)). The RA-RNTI is calculated by being calculated by both the base station device 3 and the mobile station device 1-1 based on the location to which the random access preamble is transmitted. In addition, the random access response message also includes information on other random access preambles transmitted by other mobile station devices on the same random access channel RACH.

When the mobile station device 1-1 detects that the RA-RNTI is on the downlink control channel PDCCH, the mobile station device 1-1 checks the content of the random access response message allocated on the downlink shared channel PDSCH. When information on the transmitted random access preamble is included, the mobile station device 1-1 adjusts the transmission timing for uplink based on the transmission timing information included in the random access response message. The mobile station device 1-1 transmits an L2/L3 message including information identifying the mobile station device 1-1, such as the C-RNTI (or temporary C-RNTI) or an international mobile subscriber identity (IMSI), using the scheduled wireless resource and transmission format (message 3: (3)).

When the mobile station device 1-1 adjusts the transmission timing, the mobile station device 1-1 starts a transmission timing timer in which the adjusted transmission timing is valid. When the transmission timing timer is expires, the adjusted transmission timing becomes invalid. During the period in which the transmission timing is valid, the mobile station device 1-1 is capable of data transmission to the base station device 3. When the transmission timing is invalid, the mobile station device 1-1 is capable of only random access preamble transmission. In addition, the period during which the transmission timing is valid is referred to as an "uplink synchronous state". The period during which the transmission timing is not valid is also referred to as an "uplink asynchronous state".

When the base station device 3 receives the L2/L3 message from the mobile station device 1-1, the base station device 3 transmits a collision confirmation (contention resolution) message to the mobile station device 1-1 to determine whether or not a collision is occurring among the mobile station devices 1-1 to 1-3, using the C-RNTI (or temporary C-RNTI) or the IMSI included in the received L2/L3 message (message 4: (4)).

When the mobile station device 1-1 does not detect a random access response message including a preamble number corresponding to the transmitted random access preamble within a certain period, when the mobile station device 1-1 fails to transmit the message 3, or when the mobile station device 1-1 does not detect the identification information of the own mobile station device 1-1 in the collision confirmation message within a certain period, the mobile station device 1-1 performs the procedure again from the transmission of the random access preamble (message 1: (1)). Then, when the number of transmissions of the random access preamble exceeds a maximum number of transmissions of the random access preamble indicated in the system information, the mobile station device 1-1 determines a random access failure and terminates communication with the base station device 3. After random access procedure success, exchange of control data for connection is further performed between the base station device 3 and the mobile station device 1-1. At this time, the base station device 3 notifies the mobile station device 1-1 of individually allocated uplink reference signals and allocation information of the uplink control channel PUCCH.

In addition, in the 3GPP, discussion has also begun regarding Advanced-EUTRA, which is a further evolution of EUTRA. In Advanced-EUTRA, a frequency band of up to a maximum 100 MHz bandwidth is used for uplink and for downlink, and communication at a maximum transmission rate of 1 Gbps or higher for downlink and 500 Mbps or higher for uplink is presumed.

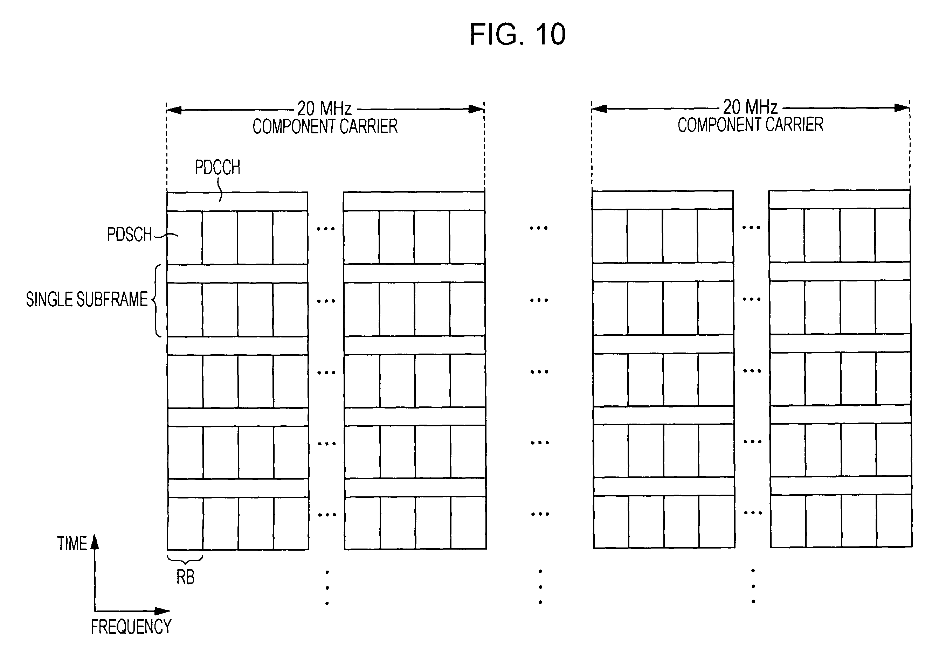

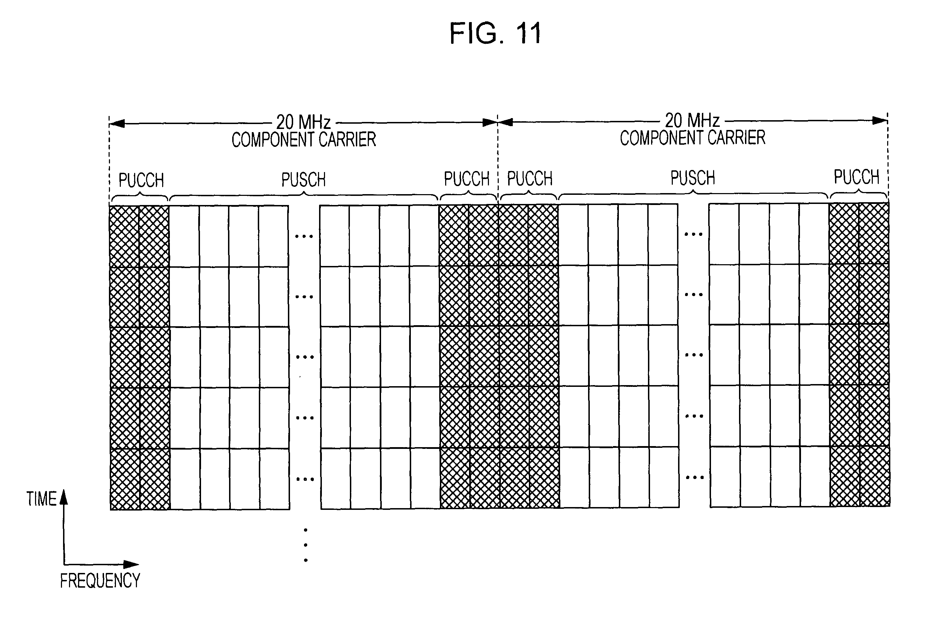

Fig. 10 is an explanatory diagram of a downlink component carrier in Advanced-EUTRA. Fig. 11 is an explanatory diagram of an uplink component carrier in Advanced-EUTRA.

In Advanced-EUTRA, it is considered that the maximum 100 MHz frequency band can be actualized by bundling a plurality of frequency bands of 20 MHz or lower in EUTRA, to allow even mobile station devices in EUTRA to be accommodated. In Advanced-EUTRA, a single frequency band of 20 MHz or lower in EUTRA is referred to as a "component carrier (CC)" (NPL 2). In addition, a single downlink component carrier and a single uplink component carrier are combined to configure a single cell. A single cell may also be configured by only a single downlink component carrier.

The base station device allocates one or more cells having differing frequencies that match the communication capabilities and communication conditions of the mobile station device, and communicates with the mobile station device via the plurality of allocated cells. Among the plurality of cells allocated to the mobile station device, one cell is a primary cell, and the other cells are secondary cells. The primary cell is configured for special functions, such as allocation of the uplink control channel PUCCH, and permission for access to the random access channel RACH. In addition, to reduce power consumption in the mobile station device, the mobile station device is configured so as not to perform a downlink reception process on a secondary cell immediately after allocation (or so as not to comply with the wireless resource allocation information designated on the downlink control channel). The mobile station device starts the downlink reception process on a secondary cell that is instructed to activate after an instruction is given from the base station device to activate (or complies with the wireless resource allocation information designated on the downlink control channel).

In addition, after the base station device instructs an activated secondary cell to deactivate, the mobile station device stops the downlink reception process performed on the secondary cell that has been instructed to deactivate (or does not comply with the wireless resource allocation information designated on the downlink control channel). A secondary cell that has been instructed to activate by the base station device and is performing the downlink reception process is referred to as an "activated cell". In addition, a secondary cell immediately after allocation to the mobile station device by the base station device, and a secondary cell that has been instructed to deactivate and has stopped the downlink reception process is referred to as a "deactivated cell". The primary cell is an activated cell at all times.

In addition, in Advanced-EUTRA, an addition of an enhanced downlink control channel (enhanced-physical downlink control channel (E-PDCCH)) may be considered to efficiently notify mobile station devices of downlink control information addressed to the respective mobile station devices. The enhanced downlink control channel E-PDCCH is allocated to the downlink shared channel PDSCH domain (data channel domain). (NPL 3)

### [Configuration Description]

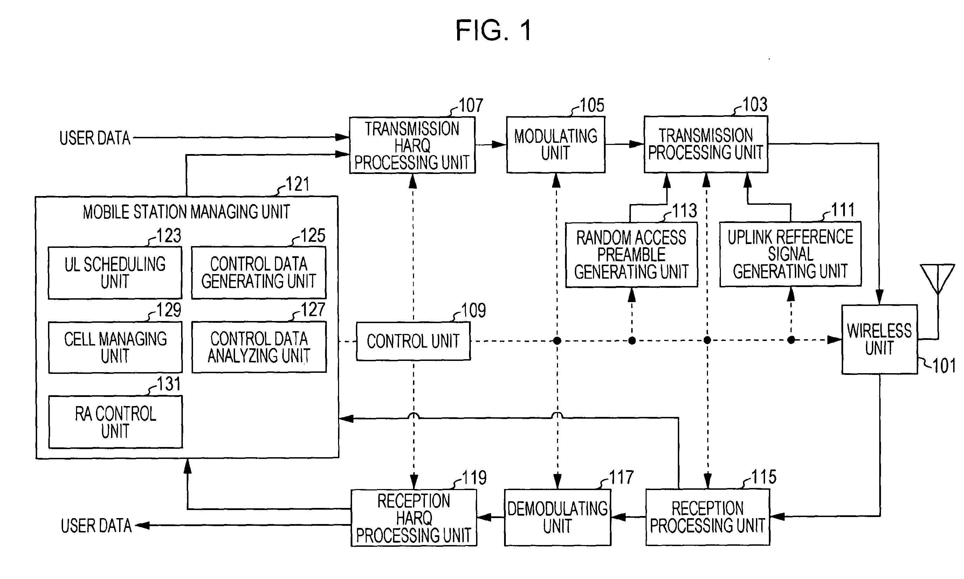

Fig. 1 is a diagram of a configuration of a mobile station device according to an embodiment of the present invention. The mobile station devices 1-1 to 1-3 are each configured by a wireless unit 101, a transmission processing unit 103, a modulating unit 105, a transmission HARQ processing unit 107, a control unit 109, an uplink reference signal generating unit 111, a random access preamble generating unit 113, a reception processing unit 115, a demodulating unit 117, a reception HARQ processing unit 119, and a mobile station managing unit 121. The mobile station managing unit 121 is configured by an UL scheduling unit 123, a control data generating unit 125, a control data analyzing unit 127, a cell managing unit 129, and a random access (RA) control unit 131.

User data and control data are inputted into the transmission HARQ processing unit 107. The transmission HARQ processing unit 107 encodes the inputted data and performs a puncture process on the encoded data, under instruction from the control unit 109. The transmission HARQ processing unit 107 then outputs the punctured data to the modulating unit 105 and stores the encoded data. In addition, when the control unit 109 gives an instruction for data retransmission, the transmission HARQ processing unit 107 performs a puncture process differing from the previously performed puncture on the stored encoded data and outputs the punctured data to the modulating unit 105.

The modulating unit 105 modulates the inputted data from the transmission HARQ processing unit 107 and outputs the modulated data to the transmission processing unit 103. The transmission processing unit 103 maps inputted data (or input signals) from the modulating unit 105, the uplink reference signal generating unit 111, and/or the random access preamble generating unit 113 to each channel of the uplink component carrier of each cell, under instruction from the control unit 109. The transmission processing unit 103 performs OFDM signal processing, such as a serial/parallel conversion, a DFT-inverse fast Fourier transform (IFFT), or a CP insertion, on the mapped data and generates an OFDM signal. The transmission processing unit 103 also adjusts the transmission timing of signals outputted for the uplink component carrier of each cell, based on the transmission timing information and group information of cells for which the transmission timing is adjusted, received from the control unit 109. The transmission processing unit 103 outputs the OFDM signal to the wireless unit 101 after adjusting the transmission timing.

The uplink reference signal generating unit 111 generates an uplink reference signal based on uplink reference signal generating information acquired from the mobile station managing unit 121 and outputs the generated uplink reference signal to the transmission processing unit 103, under instruction from the control unit 109. The random access preamble generating unit 113 generates a random access preamble from the random access-related information and the preamble number acquired from the mobile station managing unit 121 and outputs the generated random access preamble and information on the cell that is to transmit the random access preamble to the transmission processing unit 103, under instruction from the control unit 109.

The wireless unit 101 up-converts the input signal from the transmission processing unit 103 to a wireless frequency, and transmits the up-converted signal from a transmission antenna, under instruction from the control unit 109. In addition, the wireless unit 101 down-converts a wireless signal received by an antenna and outputs the down-converted signal to the reception processing unit 115.

The reception processing unit 115 performs a fast Fourier transform (FFT) process on the input signal from the wireless unit 101. The reception processing unit 115 then extracts the FFT-processed control information of the downlink control channel PDCCH or the enhanced downlink control channel E-PDCCH, and performs detection of the pieces of identification information (identification information such as C-RNTI and RA-RNTI) acquired from the control unit 109. When a piece of identification information is detected, the reception processing unit 115 outputs, to the demodulating unit 117, the FFT-processed data of the downlink shared channel PDSCH indicated in the piece of identification information. The demodulating unit 117 performs a demodulation process on the input data from the reception processing unit 115 and outputs the demodulated data to the reception HARQ processing unit 119. Allocation information for uplink data and random access instruction information indicated by the piece of identification information are outputted to the mobile station managing unit 121.

The reception HARQ processing unit 119 performs a decoding process on the input data. When the decoding process is successful, the reception HARQ processing unit 119 outputs the control data to the mobile station managing unit 121 and outputs the user data to a higher layer. When the decoding process on the input data is a failure, the reception HARQ processing unit 119 stores the data of which the decoding process has failed. When retransmitted data is received, the reception HARQ processing unit 119 combines the stored data and the retransmitted data, and performs the decoding process. In addition, the reception HARQ processing unit 119 notifies the mobile station managing unit 121 of whether or not the decoding process on the input data is successful.

The control unit 109 controls the wireless unit 101, the transmission processing unit 103, the modulating unit 105, the transmission HARQ processing unit 107, the uplink reference signal generating unit 111, the random access preamble generating unit 113, the reception processing unit 115, the demodulating unit 117, and the reception HARQ processing unit 119 based on instructions from the mobile station managing unit 121.

The mobile station managing unit 121 is configured by the UL scheduling unit 123, the control data generating unit 125, the control data analyzing unit 127, the cell managing unit 129, and the RA control unit 131. The control data generating unit 125 generates a data ACK/NACK message from the decoded results of the received data from the reception HARQ processing unit 119. In addition, the control data generating unit 125 generates control data, such as a message indicating the wireless quality for downlink, and outputs the generated control data to the transmission HARQ processing unit 107. The control data analyzing unit 127 analyzes the control data inputted from the reception HARQ processing unit 119. The control data analyzing unit 127 outputs, to the cell managing unit 129, the system information of the cell, allocation information of the cell, the transmission timing message, and the uplink reference signal generating information received from the base station device 3, and outputs the random access instruction information and the random access response message to the RA control unit 131.

The UL scheduling unit 123 controls the transmission processing unit 103, the modulating unit 105, and the transmission HARQ processing unit 107, via the control unit 109, based on the allocation information for uplink data (scheduling information) received from the reception processing unit 115 and a transmitted response (ACK/NACK) to the uplink data. In addition, the UL scheduling unit 123 instructs the cell managing unit 129 to start the random access procedure based on control information from a higher layer.

The cell managing unit 129 manages the cells allocated from the base station device 3. The cell managing unit 129 manages the system information of each cell, such as the configuration of physical channels for each cell, transmission power information, the random access-related information, and the uplink reference signal generating information, received from the base station device 3. Furthermore, the cell managing unit 129 manages the wireless resources individually allocated to the mobile station device 1-1, such as the wireless resources of the uplink reference signal (sounding reference signal), the wireless resources of the uplink control channel PUCCH, and the wireless resources of the enhanced downlink control channel

### E-PDCCH.

The cell managing unit 129 notifies the RA control unit 131 and the random access preamble generating unit 113 of the random access-related information. The cell managing unit 129 notifies the uplink reference signal generating unit 111 of the uplink reference signal generating information. At the start of communication and when a scheduling request for uplink data is made, the cell managing unit 129 instructs the RA control unit 131 to perform the random access procedure. In addition, the cell managing unit 129 manages group information of cells having the same transmission timing. When the transmission timing information for each transmission timing group is acquired, the cell managing unit 129 notifies the transmission processing unit 103 of the transmission timing information, and starts or restarts the transmission timing timer. When the enhanced downlink control channel E-PDCCH is allocated from the base station device 3, the cell managing unit 129 instructs the reception processing unit 115 to monitor the C-RNTI on the enhanced downlink control channel E-PDCCH.

When the cell managing unit 129 gives an instruction to start the random access procedure, the RA control unit 131 selects a preamble number, instructs the random access preamble generating unit 113 to transmit the random access preamble from the primary cell, and instructs the reception processing unit 115 to start monitoring the RA-RNTI on the downlink control channel PDCCH of the primary cell. When the random access instruction information is acquired, the RA control unit 131 instructs the random access preamble generating unit 113 to transmit the random access preamble from the cell indicated in the random access instruction information.

When the random access instruction information indicates that the random access procedure is performed from the primary cell, the RA control unit 131 instructs the reception processing unit 115 to start monitoring the RA-RNTI on the downlink control channel PDCCH of the primary cell. In addition, when the random access instruction information indicates that the random access procedure is performed from a secondary cell, the RA control unit 131 instructs the reception processing unit 115 to start monitoring the RA-RNTI on the enhanced downlink control channel E-PDCCH of the secondary cell. When the random access instruction information includes a preamble number, the RA control unit 131 notifies the random access preamble generating unit 113 of the included preamble number. When the random access instruction information does not include a preamble number, the RA control unit 131 selects a preamble number and notifies the random access preamble generating unit 113 of the selected preamble number.

When the random access response message is acquired, the RA control unit 131 checks whether or not the preamble number of the transmitted random access preamble is included. When the preamble number is included, the RA control unit 131 notifies the cell managing unit 129 of the transmission timing information and the uplink scheduling information, and instructs the reception processing unit 115 to stop monitoring the RA-RNTI. In addition, the RA control unit 131 ends the random access procedure when a contention resolution message is acquired. When the preamble number is not included in the random access instruction information, the RA control unit 131 ends the random access procedure upon completion of processing of the random access response message.

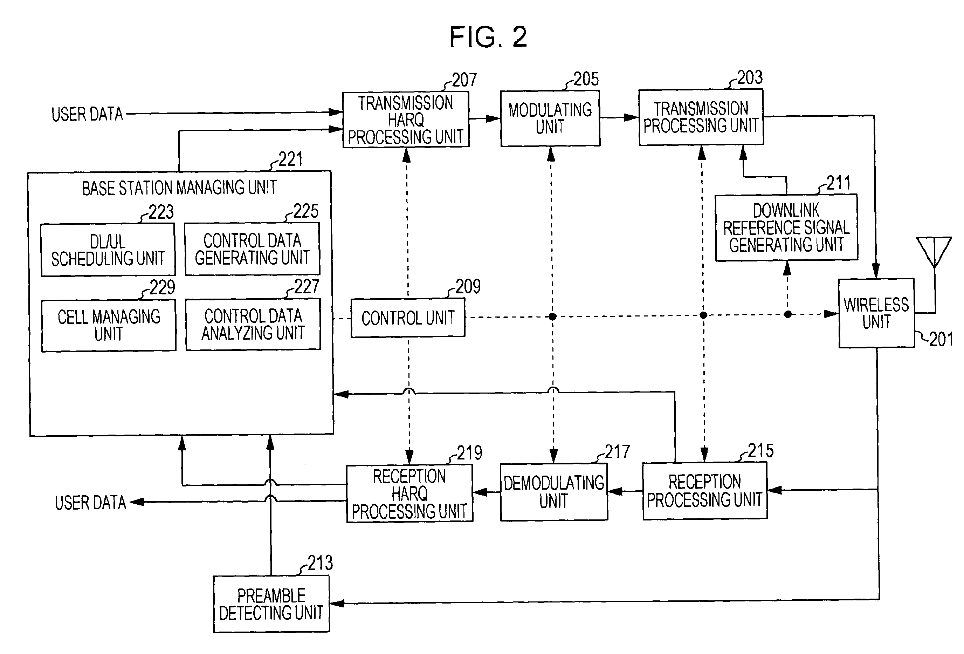

Fig. 2 is a configuration diagram of the base station device 3 according to the embodiment of the present invention. The base station device 3 is configured by a wireless unit 201, a transmission processing unit 203, a modulating unit 205, a transmission HARQ processing unit 207, a control unit 209, a downlink reference signal generating unit 211, a preamble detecting unit 213, a reception processing unit 215, a demodulating unit 217, a reception HARQ processing unit 219, and a base station managing unit 221. The base station managing unit 221 is configured by a DL/UL scheduling unit 223, a control data generating unit 225, a control data analyzing unit 227, and a cell managing unit 229.

User data and control data are inputted into the transmission HARQ processing unit 207. The transmission HARQ processing unit 207 encodes the inputted data and performs a puncture process on the encoded data, under instruction from the control unit 209. The transmission HARQ processing unit 207 then outputs the punctured data to the modulating unit 205 and stores the encoded data. When the control unit 209 gives an instruction for data retransmission, the transmission HARQ processing unit 207 acquires the stored encoded data and performs a puncture process differing from the previously performed puncture. The transmission HARQ processing unit 207 outputs the punctured data to the modulating unit 205.

The modulating unit 205 modulates the inputted data from the transmission HARQ processing unit 207 and outputs the modulated data to the transmission processing unit 203. The transmission processing unit 203 maps inputted data (or signals) from the modulating unit 205 and the downlink reference signal generating unit 211 to each channel of the downlink component carrier of each cell, such as the downlink control channel PDCCH, the downlink synchronization channel DSCH, the broadcast channel PBCH, the downlink shared channel PDSCH, and the enhanced downlink control channel E-PDCCH, under instruction from the control unit 209. The transmission processing unit 203 performs OFDM signal processing, such as a serial/parallel conversion, an inverse fast Fourier transform (IFFT), or a CP insertion, on the mapped data and generates an OFDM signal. The transmission processing unit 203 then outputs the generated OFDM signal to the wireless unit 201.

The wireless unit 201 up-converts the input signal from the transmission processing unit 203 to a wireless frequency under instruction from the control unit 209, and transmits the up-converted signal from a transmission antenna to the mobile station devices 1-1 to 1-3. In addition, the wireless unit 201 receives a wireless signal from the mobile station device 1-1, by an antenna. The wireless unit 201 down-converts the received signal to a baseband signal and outputs the received signal to the reception processing unit 215 or the preamble detecting unit 213. The reception processing unit 215 performs a fast Fourier transform (FFT) process on the input signal from the wireless unit 201 and outputs the signal to the demodulating unit 217. In addition, the reception processing unit 215 measures the wireless channel quality and the amount of deviation in transmission timing from the uplink reference signal (sounding reference signal) and gives the measured results to the base station managing unit 221. Although the communication scheme for uplink is presumed to be a single-carrier scheme such as the DFT-spread OFDM, a multi-carrier scheme such as the OFDM scheme may also be used. The demodulating unit 217 performs a demodulation process on the input data and outputs the demodulated data to the reception HARQ processing unit 219.

The reception HARQ processing unit 219 performs a decoding process on the input data. When the decoding process is successful, the reception HARQ processing unit 219 outputs the control data to the base station managing unit 221 and outputs the user data to a higher layer. When the decoding process on the input data is a failure, the reception HARQ processing unit 219 stores the data of which the decoding process has failed. When retransmitted data is received, the reception HARQ processing unit 219 combines the stored data and the retransmitted data and performs the decoding process. In addition, the reception HARQ processing unit 219 notifies the base station managing unit 221 of whether or not the decoding process on the input data is successful.

The preamble detecting unit 213 performs a correlation process on the input signal from the wireless unit 201 and performs a detection process for the random access preamble. When the random access preamble is detected, the preamble detecting unit 213 calculates the amount of deviation in transmission timing from the detected random access preamble. The preamble detecting unit 213 notifies the base station managing unit 221 of the cell from which the random access preamble is detected, information on the detected preamble, and the amount of deviation in transmission timing. The control unit 209 controls the wireless unit 201, the transmission processing unit 203, the modulating unit 205, the transmission HARQ processing unit 207, the downlink reference signal generating unit 211, the reception processing unit 215, the demodulating unit 217, and the reception HARQ processing unit 219 based on instructions from the base station managing unit 221.

The base station managing unit 221 is configured by the DL/UL scheduling unit 223 that performs scheduling for downlink and uplink, the control data generating unit 225, the control data analyzing unit 227, and the cell managing unit 229. The DL/UL scheduling unit 223 performs scheduling for mapping user data and control data to each channel for downlink, based on the wireless channel quality information for downlink notified by the mobile station device 1-1, data information of each user notified by a higher layer, and the control data generated by the control data generating unit 225, and gives the scheduling results to the control unit 209.

In addition, the DL/UL scheduling unit 223 performs scheduling for mapping user data to each channel for uplink, based on wireless channel quality results for uplink from the reception processing unit 215 and an allocation request for wireless resources from the mobile station device 1-1. In addition, when the preamble detecting unit 213 gives notification that the random access preamble is detected, the DL/UL scheduling unit 223 allocates the uplink shared channel PUSCH. The DL/UL scheduling unit 223 notifies the control data generating unit 225 of the allocated uplink shared channel PUSCH and the preamble number. The RA-RNTI that indicates the scheduling information of the random access response message allocated to the downlink shared channel PDSCH is mapped to either or both of the downlink control channel PDCCH and the enhanced downlink control channel E-PDCCH. Here, mapping (allocating) the RA-RNTI refers bitwise exclusive-OR on the RA-RNTI, for the bits of the respective CRC added to the PDCCH or E-PDCCH.

The control data generating unit 225 generates control information allocated to the downlink control channel PDCCH, control information allocated to the enhanced downlink control channel E-PDCCH, and control data allocated to the downlink shared channel PDSCH. The control data generating unit 225 generates (i) a control message including the scheduling information, (ii) a response (ACK/NACK) to uplink data, (iii) a system information message including the configuration information of physical channels, the transmission power information for each channel, and the random access-related information, (iv) an initial setting message including setting information of the cell to be used (including the random access-related information), (v) the random access response message including the preamble number, the transmission timing information, and the scheduling information, (vi) the contention resolution message, (vii) the random access instruction information including the preamble number and the random access channel location, and (viii) control data such as the transmission timing message including the transmission timing information. The control data analyzing unit 227 controls the transmission HARQ processing unit 207, via the control unit 209, based on the response (ACK/NACK) result for downlink data from the mobile station device 1-1.

The cell managing unit 229 manages each cell and the system information of each cell (such as the configuration information of physical channels, the transmission power information for each channel, the random access-related information, and cell relation information for transmission timing). In addition, the cell managing unit 229 allocates one or more cells to the mobile station devices 1-1 to 1-3. The cell managing unit 229 also allocates the wireless resources of the uplink reference signal (sounding reference signal) and the wireless resources of the uplink control channel PUCCH. The cell managing unit 229 then notifies the control data generating unit 225 of the allocation information of the cells, the system information of the cells, the uplink reference signal, information on the wireless resources to which the uplink control channel PUCCH is allocated, and the like to give notification of information related to the allocated cell.

The cell managing unit 229 allocates C-RNTIs to the mobile station devices 1-1 to 1-3, and notifies the control data generating unit 225 of the allocated C-RNTIs. The cell managing unit 229 also allocates the wireless resources of the enhanced downlink control channel E-PDCCH to the mobile station devices 1-1 to 1-3. The cell managing unit 229 may allocate the enhanced downlink control channel E-PDCCH to all allocated cells or may allocate the enhanced downlink control channel E-PDCCH to necessary cells.

In addition, the cell managing unit 229 manages the transmission timing and the transmission timing timer for each cell of the mobile station devices 1-1 to 1-3. The cell managing unit 229 also manages cell relation information on cells having the same transmission timing. When the amount of deviation of transmission timing is acquired from the preamble detecting unit 213 or the reception processing unit 215, the cell managing unit 229 generates the transmission timing information and notifies the control data generating unit 225 of the transmission timing information. When the transmission timing information is transmitted, the cell managing unit 229 starts or restarts the transmission timing timer.

When the mobile station device 1-1 is made to perform the random access procedure, the cell managing unit 229 selects the preamble number, the random access channel location, and the cell. The cell managing unit 229 notifies the control data generating unit 225 of the selected preamble number, random access channel location, and cell.

### [Operation Description]

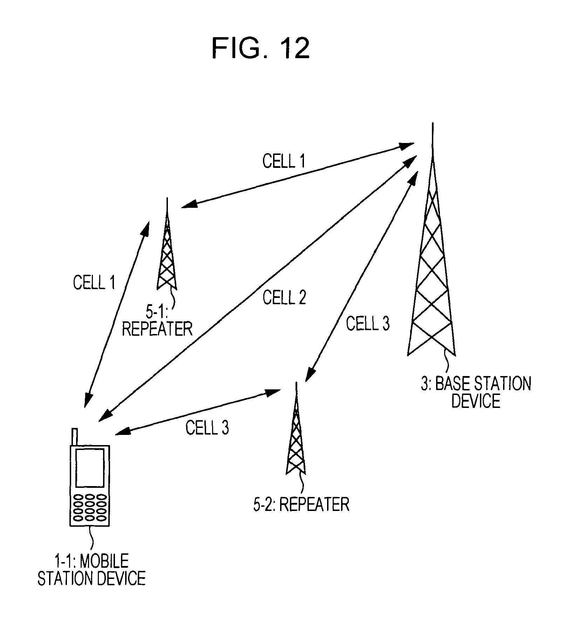

A wireless communication system described with reference to Fig. 10 and Fig. 11 is presumed in which a base station device allocates a plurality of cells to a mobile station device, and the base station device and the mobile station device communicate via the allocated plurality of cells. In addition, a wireless communication system described with reference to Fig. 12 is presumed in which communication is performed via a plurality of cells of which transmission timings from the mobile station device differ.

In Advanced-EUTRA, the base station device allocates, for each frequency, one or more cells having differing frequencies that match the communication capabilities and communication conditions of the mobile station device, from a plurality of cells. The mobile station device performs transmission and reception of data to and from the base station device via the allocated cells. When communication with the base station device is performed using a plurality of cells, the mobile station device may connect to the base station device via a repeater or a remote radio head (RRH) as shown in Fig. 12. In such instances, the reception timing of data from the downlink component carrier at the mobile station device may differ with each cell. Furthermore, the transmission timing to the base station device may also differ with the uplink component carrier of each cell. When the transmission timing to the base station device differs with each uplink component carrier, the mobile station device is required to adjust the transmission timing for the uplink component carrier of each cell (or for each group of uplink component carriers).

In addition, in Advanced-EUTRA, the mobile station device receives data from the base station device via the plurality of cells. Therefore, in Advanced-EUTRA, the common search space in the search spaces of the secondary cells is not monitored, to reduce operation load placed on the mobile station device during a reception process.

However, the random access response identifier RA-RNTI that indicates a response to a random access preamble transmission is allocated to the common search space of the downlink control channel PDCCH and transmitted. Therefore, the mobile station device cannot detect the RA-RNTI even when the random access procedure is performed from the secondary cell and the random access preamble transmission is performed. Therefore, the mobile station device cannot receive the random access response message which is a response to the random access preamble transmission. In addition, in Advanced-EUTRA, when the mobile station device connects to the base station device via the RRH, the downlink shared channel PDSCH can be received using a retransmission process even when interference occurs. However, in Advanced-EUTRA, an instance in which the mobile station device cannot receive the downlink control channel PDCCH due to interference is also a subject of discussion.

The base station device allocates (configures), as required, the enhanced downlink control channel E-PDCCH to a mobile station device to which a plurality of cells are allocated. The base station device then allocates the random access response identifier RA-RNTI to both the downlink control channel PDCCH and the enhanced downlink control channel E-PDCCH, and transmits the random access response message on the downlink shared channel PDSCH. The allocation information of the random access response message indicated on both the downlink control channel PDCCH and the enhanced downlink control channel E-PDCCH may indicate the same downlink shared channel PDSCH.

When the random access preamble is transmitted from the primary cell, the mobile station device monitors the RA-RNTI on the downlink control channel PDCCH. When the random access preamble is transmitted from the secondary cell, the mobile station device monitors the RA-RNTI on the enhanced downlink control channel E-PDCCH. When the RA-RNTI is detected on the enhanced downlink control channel E-PDCCH, the mobile station device performs a reception process for the random access response message. Here, "monitoring the RA-RNTI" refers to the mobile station device considering the RA-RNTI to be a 16-bit bit string, and checking the CRC descrambled by taking the exclusive-OR of the CRC of the 16 bits added to the downlink control channel PDCCH or the enhanced downlink control channel E-PDCCH, and the RA-RNTI. In addition, "detecting the RA-RNTI" refers to the mobile station device receiving the downlink control channel PDCCH or the enhanced downlink control channel E-PDCCH without error by performing a CRC check after the descrambling, described above.

As a result, the base station device can notify a mobile station device that cannot read the downlink control channel PDCCH of the secondary cell of the allocation information of the random access response by merely allocating the RA-RNTI to the enhanced downlink control channel E-PDCCH, adding the allocation information of the random access response message and transmitting the allocation information of the random access response message. In addition, the mobile station device can monitor the enhanced downlink control channel E-PDCCH of the secondary cell from which the random access preamble has been transmitted and detect the RA-RNTI, thereby acquiring the allocation information of the random access response from the enhanced downlink control channel E-PDCCH, even when the mobile station device cannot read the downlink control channel PDCCH of the secondary cell.

The base station device groups cells of which the transmission timing from the mobile station device is the same (referred to, hereinafter, as a "transmission timing group"). Then, the base station device sets one cell as the primary cell and the other cells as the secondary cells. After the base station device sets the plurality of cells and the transmission timing groups, when the mobile station device acquires the transmission timing information from a certain cell, the mobile station device adjusts the transmission timing for uplink using the acquired transmission timing information for all cells in the transmission timing group to which the cell that has given notification of the transmission timing information belongs.

The transmission timing group is classified into (i) a first transmission timing group composed of the primary cell and secondary cells having the same uplink transmission timing as the primary cell and (ii) a second transmission timing group configured by secondary cells having the same uplink transmission timing that differs from the uplink transmission timing of the primary cell. The first transmission timing group includes at least the primary cell. The second transmission timing group includes at least one secondary cell.

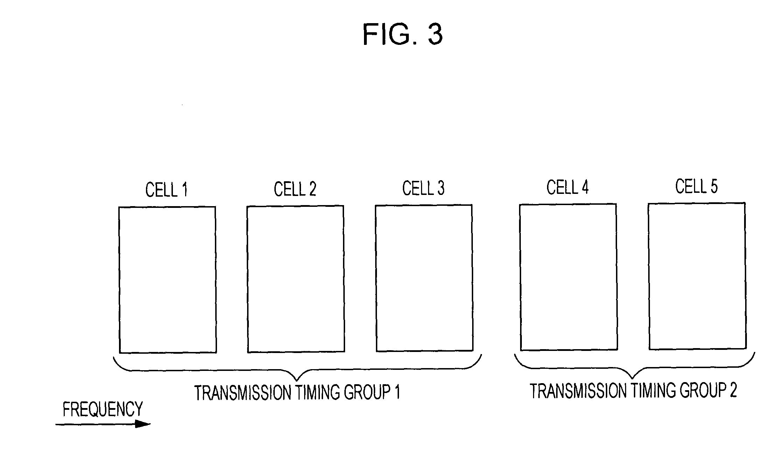

Operations of the mobile station device 1-1 and the base station device 3 will be described. As an example, the base station device 3 is configured by cell 1 to cell 5, as shown in Fig. 3. Cell 1 to cell 3 belong to a transmission timing group that has the same transmission timing. Cell 4 and cell 5 belong to a transmission timing group that has the same transmission timing, and is a different transmission timing group from the transmission timing group of cell 1 to cell 3.

The mobile station device 1-1 performs a cell search and finds a cell of the base station device 3. Here, the mobile station device 1-1 is presumed to have found cell 1. The mobile station device 1-1 receives the broadcast channel PBCH or the like of cell 1, and acquires system information (such as the physical channel configuration of the cell, the transmission power information, and the random access-related information). The mobile station device 1-1 then selects a preamble number using the random access-related information included in the system information and generates a random access preamble. The mobile station device 1-1 transmits the random access preamble to the random access channel RACH of cell 1 for initial access. Then, the mobile station device 1-1 starts monitoring the random access response identifier RA-RNTI on the downlink control channel PDCCH.

When the random access preamble is detected, the base station device 3 generates a random access response message including the preamble number and the transmission timing information. The base station device 3 allocates the allocation information of the random access response to the downlink control channel PDCCH and the enhanced downlink control channel E-PDCCH. The base station device 3 allocates the random access response message to the downlink shared channel PDSCH. The base station device 3 transmits the allocated allocation information of the random access response and the random access response message to the mobile station device 1-1.

Then, the mobile station device 1-1 detects the RA-RNTI on the downlink control channel PDCCH. The mobile station device 1-1 decodes the random access response message from the allocation information of the random access response message. When the preamble number of the transmitted random access preamble is detected in the random access response message, the mobile station device 1-1 adjusts the transmission timing of the uplink component carrier corresponding to cell 1 based on the transmission timing information included in the random access response and starts the transmission timing timer. The mobile station device 1-1 transmits the message 3 to the base station device 3 via cell 1. The mobile station device 1-1 includes content indicating the initial access in the message 3 and transmits the message 3. Then, when a contention resolution is received from the base station device 3, the mobile station device 1-1 ends the contention-based random access procedure.

After completion of the random access procedure, the base station device 3 allocates the cells to be used by the mobile station device 1-1 and gives notification of configuration information of the cells. The configuration information of the cells refers to cell information of the primary cell and information related to the transmission timing group. Here, the base station device 3 allocates cell 1 to cell 5 to the mobile station device 1-1. The base station device 3 sets cell 1 as the primary cell, and cell 2 to cell 5 as secondary cells. The base station device 3 sets cell 1 to cell 3 in the same transmission timing group (transmission timing group 1), and sets cell 4 and cell 5 in the same transmission timing group (transmission timing group 2).

Then, the base station device 3 notifies the mobile station device 1-1 of (i) the system information of the cells allocated to the mobile station device 1-1 and group information of the transmission timing groups, (ii) the allocation information of the enhanced downlink control channel E-PDCCH, the allocation information of the uplink control channel PUCCH of the primary cell, the uplink reference signal (sounding reference signal) generating information, and the wireless resource allocation information for transmission of the uplink reference signal (sounding reference signal), and (iii) periodic setting information such as the wireless resource allocation information of the uplink shared channel PUSCH. Here, after giving notification of the above-described information, the base station device 3 instructs the mobile station device 1-1 to activate and to start the downlink reception process from cell 2 to cell 5.

Then, the mobile station device 1-1 starts monitoring the individual search spaces of the downlink control channel PDCCH of the primary cell and the downlink control channel PDCCH of the secondary cells. After acquiring the system information of the allocated cells and the group information of the transmission timing groups, the mobile station device 1-1 adjusts the uplink transmission timings of cell 2 and cell 3 that belong to the same transmission timing group as cell 1, based on the group information of the transmission timing group and the acquired transmission timing information. Then, data exchange is performed between the mobile station device 1-1 and the base station device 3, via the downlink component carriers of cell 1 to cell 5 and the uplink component carriers of cell 1 to cell 3.

When the transmitted data volume from the mobile station device 1-1 increases and a cell that is not used by the mobile station device 1-1 is present, the base station device 3 gives notification on the downlink control channel PDCCH of random access instruction information indicating that the non-contention-based random access procedure be performed. Here, the base station device 3 notifies the mobile station device 1-1 of the random access instruction information for cell 5. The random access instruction information includes a preamble number and a random access channel number. The mobile station device 1-1 generates a random access preamble using the preamble and the random access channel RACH designated by the base station device 3. The mobile station device 1-1 transmits the random access preamble on the random access channel RACH of cell 5. Then, the mobile station device 1-1 starts monitoring the enhanced downlink control channel E-PDCCH allocated to cell 5.

When the random access preamble is detected, the base station device 3 generates a random access response message including the preamble number and the transmission timing information. The base station device 3 allocates the allocation information of the random access response to the downlink control channel PDCCH and the enhanced downlink control channel E-PDCCH of cell 5. The base station device 3 allocates the random access response message to the downlink shared channel PDSCH. The base station device 3 transmits the allocated allocation information of the random access response and the random access response message to the mobile station device 1-1.

The mobile station device 1-1 detects the RA-RNTI on the enhanced downlink control channel E-PDCCH. The mobile station device 1-1 decodes the random access response message from the allocation information of the random access response message. When the preamble number of the transmitted random access preamble is detected from the random access response message, the mobile station device 1-1 sets the transmission timing information included in the random access response as the uplink transmission timing of cell 5. The mobile station device 1-1 further sets (adjusts) the transmission timing information as the uplink transmission timing of cell 4 that belongs to the same transmission timing group. The mobile station device 1-1 starts the transmission timing timer applied to the transmission timing group (transmission timing group 2) of cell 4 and cell 5. Then, the mobile station device 1-1 ends the non-contention-based random access procedure. Subsequently, data exchange is performed between the mobile station device 1-1 and the base station device 3, including the uplink component carriers of cell 4 and cell 5. The mobile station device 1-1 performs a similar process when instructed by the base station device 3 to perform the contention-based random access procedure.

The mobile station device 1-1 has a single transmission timing timer for each transmission timing group. When the transmission timing information is acquired, the mobile station device 1-1 starts or restarts the transmission timing timer. The base station device 3 also has single transmission timing timer for each transmission timing group, in a manner similar to the mobile station device 1-1. The base station device 3 starts or restarts the transmission timing timer after transmitting the transmission timing information. While the transmission timing timer is operating, an uplink synchronous state is achieved (the transmission timing is valid). Therefore, while the transmission timing timer is operating, the mobile station device 1-1 can perform uplink transmission through the uplink component carriers of the subject transmission timing group.

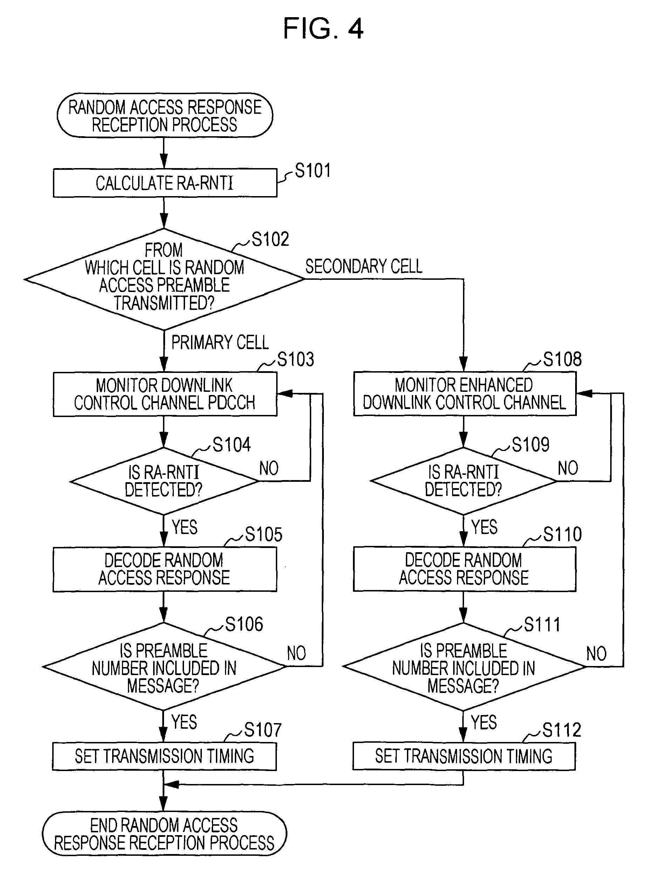

A flowchart of the random access reception process by the mobile station device 1-1 is shown in Fig. 4.

When the random access preamble is transmitted, the mobile station device 1-1 calculates the random access response identifier RA-RNTI (Step S101). Then, the mobile station device 1-1 checks from which cell the random access preamble is transmitted (Step S102). When the random access preamble is transmitted from the primary cell, the mobile station device 1-1 starts monitoring the calculated RA-RNTI in the common search space of the downlink control channel PDCCH of the primary cell (Step S103). The mobile station device 1-1 checks whether or not the calculated RA-RNTI is detected for each subframe (Step S104).

When the RA-RNTI is detected, the mobile station device 1-1 demodulates the random access response message allocated to the downlink shared channel PDSCH in accordance with the allocation information (Step S105). When the RA-RNTI is not detected, the mobile station device 1-1 continues monitoring the RA-RNTI. After demodulation of the random access response message, the mobile station device 1-1 checks whether or not the preamble number of the transmitted random access preamble is included in the random access response message (Step S106).

When the preamble number is included in the random access response message, the mobile station device 1-1 sets the transmission timing information included in the random access response message as the transmission timing of the cell that has performed the random access preamble transmission (Step S107). Then, if the random access procedure that is being performed is the non-contention-based random access, the mobile station device 1-1 ends the random access procedure. When the random access procedure that is being performed is the contention-based random access procedure, the mobile station device 1-1 performs transmission of the L2/L3 message. When the preamble number is not included in the random access response message, the mobile station device 1-1 continues monitoring the RA-RNTI.

When the random access preamble is transmitted from the secondary cell, the mobile station device 1-1 starts monitoring the calculated RA-RNTI on the enhanced downlink control channel E-PDCCH (Step S108). The mobile station device 1-1 checks whether or not the calculated RA-RNTI is detected (Step S109). When the RA-RNTI is detected, the mobile station device 1-1 demodulates the random access response message allocated to the downlink shared channel PDSCH in accordance with the allocation information (Step S110).

When the RA-RNTI is not detected, the mobile station device 1-1 continues monitoring the RA-RNTI on either the downlink control channel PDCCH or the enhanced downlink control channel E-PDCCH. After demodulation of the random access response message, the mobile station device 1-1 checks whether or not the preamble number of the transmitted random access preamble is included in the random access response message (Step S111). When the preamble number is included in the random access response message, the mobile station device 1-1 sets the transmission timing information included in the random access response message as the transmission timing of the cell that has performed the random access preamble transmission (Step S112).

Then, when the random access procedure that is being performed is the non-contention-based random access, the mobile station device 1-1 ends the random access procedure. When the random access procedure that is being performed is the contention-based random access procedure, the mobile station device 1-1 performs transmission of the L2/L3 message. When the preamble number is not included in the random access response message, the mobile station device 1-1 continues monitoring the RA-RNTI. When a random access response message including the preamble number of the transmitted random access preamble is not received within a certain amount of time, the mobile station device 1-1 terminates the random access response reception process and performs the random access preamble transmission again.

The base station device 3 may set a common search space and individual search spaces on the enhanced downlink control channel E-PDCCH, in a manner similar to the downlink control channel PDCCH. In this instance, when the base station device 3 allocates the enhanced downlink control channel E-PDCCH to the primary cell or the secondary cell, the mobile station device 1-1 monitors the C-RNTI of the own mobile station device in the individual search space on the enhanced downlink control channel E-PDCCH. Then, when the random access preamble is transmitted from the secondary cell, the mobile station device 1-1 monitors the RA-RNTI in the common search space on the enhanced downlink control channel E-PDCCH of the secondary cell.

In addition, the base station device 3 may be configured to transmit control information including the C-RNTIs of the individual mobile station devices from the individual search spaces on the enhanced downlink control channel E-PDCCH, and transmit control information for a plurality of mobile station devices, such as control information including the RA-RNTI, from the common search space on the enhanced downlink control channel E-PDCCH. The base station device 3 notifies the mobile station device 1-1 of information related to allocation of the common search space and the individual search space on the enhanced downlink control channel E-PDCCH by an RRC layer message (RRC message, broadcast information), the L2/L3 message, or control data of the downlink control channel PDCCH. The base station device 3 gives notification of the control information for individual mobile station devices, such as the random access instruction information, in the individual search space on the enhanced downlink control channel E-PDCCH.

In addition, when the enhanced downlink control channel E-PDCCH is allocated to the mobile station device 1-1, the base station device 3 may set whether the RA-RNTI is monitored on either of the downlink control channel PDCCH and the enhanced downlink control channel E-PDCCH, or both control channels, in cell units. The mobile station device 1-1 monitors the RA-RNTI on either of the downlink control channel PDCCH and the enhanced downlink control channel E-PDCCH, or both control channels, in accordance with the setting by the base station device 3.

As a result of the above, the base station device can notify a mobile station device that cannot read the downlink control channel PDCCH of the secondary cell of the allocation information of the random access response by merely allocating the enhanced downlink control channel E-PDCCH to the mobile station device, adding the allocation information of the random access response message to the enhanced downlink control channel E-PDCCH, and transmitting the allocation information of the random access response message.

An embodiment of the invention has been described in detail above, with reference to the drawings. However, specific configurations are not limited to those described above. Various design modifications and the like can be made without departing from the spirit of the invention.

In addition, for convenience of description, the mobile station device 1-1 and the base station device 3 according to the embodiment are described with reference to functional block diagrams. However, a program for actualizing the functions of each unit of the mobile station device 1-1 and the base station device 3, or some of these functions, may be recorded on a computer-readable recording medium. The program recorded on the recording medium may be loaded onto a computer system and executed, thereby performing control of the mobile station device and the base station device. Here, the "computer system" includes an OS and hardware such as peripheral devices.

In addition, the "computer-readable recording medium" refers to a portable medium, such as a flexible disk, a magneto-optical disk, a ROM, or a CD-ROM, or a storage device such as a hard disk that is included in the computer system. Furthermore, the "computer-readable recording medium" includes that which dynamically holds the program for a short period of time, such as a communication line in an instance in which the program is transmitted over a network, such as the Internet, or a communication line, such as a telephone line, and that which holds the program for a certain amount of time, such as a volatile memory within a computer system serving as a server or a client, in this instance. In addition, the above-described program may be for actualizing some of the above-described functions, and furthermore, may be capable of actualizing the above-described functions in combination with a program already recorded in the computer system.

In addition, each functional block used in the above-described embodiment may be typically actualized as an LSI that is an integrated circuit. Each function block may be in the form of individual chips, or some or all may be integrated into a chip. In addition, a method for forming the integrated circuit is not limited to the LSI and may be actualized by a dedicated circuit or a general-purpose processor. Furthermore, if a technology for forming an integrated circuit that replaces LSI emerges due to advancement in semiconductor technology, an integrated circuit formed by this technology can also be used.

An embodiment of the invention is described in detail above, with reference to the drawings. However, specific configurations are not limited to those according to the embodiment, and designs and the like within a scope that does not depart from the spirit of the invention are included in the scope of claims.

### Reference Signs List

1-1 to 1-3 mobile station device
3 base station device
5-1, 5-2 repeater
101, 201 wireless unit
103, 203 transmission processing unit
115, 215 reception processing unit
105, 205 modulating unit
117, 217 demodulating unit
107, 207 transmission HARQ processing unit
119, 219 reception HARQ processing unit
109, 209 control unit
121 mobile station managing unit
221 base station managing unit
123 UL scheduling unit
125, 225 control data generating unit
127, 227 control data analyzing unit
129, 229 cell managing unit
131 RA control unit
111 uplink reference signal generating unit
211 downlink reference signal generating unit
113 random access preamble generating unit
213 preamble detecting unit
223 DL/UL scheduling unit

## Claims

1. A wireless communication system in which a base station device and a mobile station device communicate using a plurality of cells of which downlink is composed of at least a first control channel, a second control channel, and a data channel, the wireless communication system wherein:
the plurality of cells are composed of a single primary cell and one or more secondary cells;
the mobile station device
monitors the first control channel of the primary cell, in an instance in which a random access preamble is transmitted from the primary cell to the base station device,
monitors the second control channel of the secondary cell, in an instance in which the random access preamble is transmitted from the secondary cell to the base station device, and
receives a random access response message that is allocated on the data channel from the base station device, in an instance in which a random access response identifier that indicates a response to the random access preamble transmission is detected on the control channel that is being monitored; and
the base station device transmits, to the mobile station device, the random access response identifier on at least either of the first control channel and the second control channel of a downlink corresponding to an uplink on which the random access preamble is received, and transmits the random access response message on the data channel, in an instance in which the random access preamble is received from the mobile station device.

2. The wireless communication system according to claim 1, wherein:
the mobile station device monitors a common search space on the second control channel of the secondary cell, in an instance in which the random access preamble is transmitted from the secondary cell.

3. The wireless communication system according to claim 1, wherein:
the base station device
transmits the random access response identifier from the common search space on the first control channel of the primary cell, in an instance in which the random access preamble is received from the primary cell, and
transmits the random access response identifier from the common search space on the second control channel of the secondary cell, in an instance in which the random access preamble is received from the secondary cell.

4. A mobile station device that communicates with a base station device using a plurality of cells of which downlink is composed of at least a first control channel, a second control channel, and a data channel, the mobile station device wherein:
the plurality of cells are composed of a single primary cell and one or more secondary cells; and
the mobile station device
monitors the first control channel of the primary cell, in an instance in which a random access preamble is transmitted from the primary cell to the base station device,
monitors the second control channel of the secondary cell, in an instance in which the random access preamble is transmitted from the secondary cell to the base station device, and
receives a random access response message that is allocated on the data channel from the base station device, in an instance in which a random access response identifier that indicates a response to the random access preamble transmission is detected.

5. A base station device that communicates with a mobile station device using a plurality of cells of which downlink is composed of at least a first control channel, a second control channel, and a data channel, the base station device wherein:
the plurality of cells are composed of a single primary cell and one or more secondary cells; and
the base station device transmits, to the mobile station device, a random access response identifier that indicates a response to a received random access preamble on at least either of the first control channel and the second control channel of a downlink corresponding to an uplink on which the random access preamble is received, and transmits a random access response message on the data channel, in an instance in which the random access preamble is received from the mobile station device.

6. A wireless communication method that is applied to a wireless communication system in which a base station device and a mobile station device communicate using a plurality of cells of which downlink is composed of at least a first control channel, a second control channel, and a data channel, the wireless communication method wherein:
the plurality of cells are composed of a single primary cell and one or more secondary cells; and
the wireless communication method includes at least
a step of monitoring, by the mobile station device, the first control channel of the primary cell, in an instance in which the mobile station device transmits a random access preamble from the primary cell to the base station device,
a step of monitoring, by the mobile station device, the second control channel of the secondary cell, in an instance in which the mobile station device transmits the random access preamble from the secondary cell to the base station device,
a step of receiving, by the mobile station device, a random access response message that is allocated on the data channel from the base station device, in an instance in which the mobile station device detects a random access response identifier that indicates a response to the random access preamble transmission on the control channel, and
a step of transmitting, by the base station device to the mobile station device, the random access response identifier on at least either of the first control channel and the second control channel of a downlink corresponding to an uplink on which the random access preamble is received, and transmitting the random access response message on the data channel, in an instance in which the base station device receives the random access preamble.

7. An integrated circuit applied to a mobile station device that communicates with a base station device using a plurality of cells of which downlink is composed of at least a first control channel, a second control channel, and a data channel, the integrated circuit wherein:
the plurality of cells are composed of a single primary cell and one or more secondary cells; and
the integrated circuit includes
a means for monitoring the first control channel of the primary cell, in an instance in which a random access preamble is transmitted from the primary cell to the base station device,
a means for monitoring the second control channel of the secondary cell, in an instance in which the random access preamble is transmitted from the secondary cell to the base station device, and
a means for receiving a random access response message that is allocated on the data channel from the base station device, in an instance in which a random access response identifier that indicates a response to the random access preamble transmission is detected.

8. An integrated circuit applied to a base station device that communicates with a mobile station device using a plurality of cells of which downlink is composed of at least a first control channel, a second control channel, and a data channel, the integrated circuit wherein:
the plurality of cells are composed of a single primary cell and one or more secondary cells; and
the integrated circuit includes
a means for transmitting a random access response identifier that indicates a response to a received random access preamble on at least either of the first control channel and the second control channel of a downlink corresponding to an uplink by which the random access preamble is received, in an instance in which the random access preamble is received from the mobile station device, and
a means for transmitting a random access response message on the data channel, in an instance in which the random access preamble is received from the mobile station device.
